# EUROPÄISCHE PATENTSCHRIFT

(11) **EP 1 631 471 B1**
(45) Veröffentlichungstag und Bekanntmachung des Hinweises auf die Patenterteilung: **04.06.2014**
(21) Anmeldenummer: 04733773.8
(22) Anmeldetag: 19.05.2004
(51) Int. Cl.: B60K 17/16

(54) **GETRIEBESTÜTZE ZUR LAGERUNG EINES GETRIEBES UND GETRIEBE MIT DERARTIGER GETRIEBESTÜTZE**
DRIVE SUPPORT FOR BEARING A DRIVE AND DRIVE COMPRISING DRIVE SUPPORT OF THIS TYPE
SUPPORT DE BOITE DE VITESSES POUR LE MONTAGE D'UNE BOITE DE VITESSES, ET BOITE DE VITESSES POURVUE D'UN TEL SUPPORT

(30) Priorität: 30.05.2003 DE 10325381
(43) Veröffentlichungstag der Anmeldung: 08.03.2006
(73) Patentinhaber: GETRAG Getriebe- und Zahnradfabrik Hermann Hagenmeyer GmbH & Cie KG, 74199 Untergruppenbach (DE); Dr. Ing. h.c. F. Porsche AG, 70435 Stuttgart (DE)
(72) Erfinder: TEUTEBERG, Rolf, 74321 Bietigheim (DE); BAUER, Martin, 71549 Auenwald (DE); CERVO, Ciro, 70771 Leinfelden (DE); KOHLER, Petra, 71726 Bennningen (DE); LOHMANN, Georg, 74629 Pfedelbach (DE); NOLL, Anton, 74632 Neuenstein (DE); TREFZ, Markus, 74245 Loewenstein (DE); ALLGOEWER, Andreas, 89191 Nellingen (DE); EISENHAUER, Egon, 71296 Heimshein (DE); RIES, Roland, 71299 Wimsheim (DE)
(74) Vertreter: Steil, Christian
(86) Internationale Anmeldenummer: PCT/EP2004/005372
(87) Internationale Veröffentlichungsnummer: WO 2004/106098

(56) Entgegenhaltungen:
- EP-A- 0 005 839
- DE-A- 3 044 288
- DE-A- 4 220 629
- US-A- 5 267 623
- PATENT ABSTRACTS OF JAPAN Bd. 0130, Nr. 67 (M-798), 15. Februar 1989 (1989-02-15) & JP 63 269721 A (MAZDA MOTOR CORP), 8. November 1988 (1988-11-08)

## Beschreibung

Die vorliegende Erfindung betrifft eine Getriebestütze zur Lagerung eines Getriebes an einem Kraftfahrzeug, insbesondere für Achsgetriebe, mit einem länglichen Trägerabschnitt, der entlang einer Längsachse ausgerichtet ist, einem Flanschabschnitt an einem Ende des Trägerabschnittes, wobei der Flanschabschnitt zur Befestigung der Getriebestütze an einem Gehäuse des Getriebes dient, und einem Lagerabschnitt im Bereich eines entgegengesetzten Endes des Trägerabschnittes, wobei der Lagerabschnitt zur Lagerung der Getriebestütze an dem Kraftfahrzeug dient.

Ferner betrifft die vorliegende Erfindung ein Getriebe mit einer derartigen angeflanschten Getriebestütze.

Getriebe werden an einem Kraftfahrzeug in der Regel an mehreren Aufhängungspunkten gelagert. Die Lagerpunkte müssen dazu geeignet sein, Reaktionsmomente abzustützen, die sich daraus ergeben, dass über das Getriebe Drehmomente übertragen werden.

Hierzu ist es bekannt, an dem Getriebegehäuse vorstehende Getriebestützen vorzusehen, um Lagerpunkte beabstandet von dem Gehäuse des Getriebes vorzusehen. Dies kann zum einen dazu dienen, günstige Lagerpunkte an dem Kraftfahrzeug zu "erreichen". Auch kann die Verwendung derartiger Getriebestützen dazu dienen, den Hebelarm zur Aufnahme der Reaktionsmomente zu vergrößern. Hierdurch werden die Reaktionskräfte reduziert und die Verwendung weicherer Gummilager wird ermöglicht. Dies führt in der Regel zu einem besseren akustischen Verhalten des Antriebsstranges.

Beispiele derartiger Getriebestützen sind offenbart in den Druckschriften DE 196 24 002, DE 34 42 584, DE 196 23 936 C1 und DE 100 20 079 C1.

Die Getriebestützen sind teilweise in das Gehäuse des Getriebes integriert (z.B. 100 20 079 C1), oder sind als separate Elemente ausgebildet (z.B. DE 85 21 933 U1).

Ferner ist es aus dem Antriebsstrang des vierradgetriebenen Porsche 996 bekannt, an dem Vorderachsdifferential eine Getriebestütze anzuflanschen, die ausgehend vom Gehäuse des Vorderachsdifferentials die Kardanwelle umgibt. Diese Getriebestütze ist gattungsbildend und weist einen länglichen Trägerabschnitt in Form eines Rohres mit etwa rechteckförmigem Querschnitt auf. An einem Ende des Trägerabschnittes ist ein Flanschabschnitt vorgesehen, der zur Befestigung an dem Gehäuse des Getriebes dient. Dabei kann der Flanschabschnitt einen Teil des Gehäuses bilden, wobei dann in der Regel eine Wellendichtung zur Abdichtung der Kardanwelle in den Flanschabschnitt integriert ist. An dem anderen Ende des Trägerabschnittes ist ein Lagerabschnitt in Form einer seitlich versetzt gegenüber dem Trägerabschnitt angeformten, etwa kreisförmigen Öse vorgesehen. In die Öse ist ein Gummilager einsetzbar. Die Getriebestütze wird im Sandguss hergestellt, als einteilig gegossenes Profil.

Ferner ist es bekannt, derartige Getriebestützen als gezogenes Rohr mit eingepressten oder angeschweißten Endstücken auszubilden, die als Guss- oder Schmiedeteile ausgebildet sind.

Diese Art von Konstruktion ist vergleichsweise teuer in der Herstellung, da die Getriebestütze aus drei Einzelteilen hergestellt wird, die aneinandergefügt werden müssen.

Die Getriebestütze für das Vorderachsdifferential des Porsche 996 ist ebenfalls vergleichsweise unwirtschaftlich in der Herstellung.

Generell ist auch das akustische Verhalten derartiger Getriebestützen ein Problem. Durch große geschlossene Abstrahlflächen wird bei Anregung durch eine Verzahnung des Antriebsstranges Luftschall im Resonanzbereich abgestrahlt.

Aus der DE 30 44 288 A1 ist ein Triebwerksaggregat für ein Kraftfahrzeug mit einer vorn liegenden Antriebseinheit bekannt, bei der über ein biege- und drehsteifes, die Antriebswelle aufnehmendes Tragrohr mit einer hinten liegenden Antriebseinheit verbunden ist, wobei das Tragrohr eine Einrichtung zur Luftschalldämpfung umfasst, wobei die Einrichtung durch mehrere Öffnungen gebildet wird, die in einer die Abstrahlfläche des Luftschalls bildenden Wandung des Tragrohres angeordnet sind.

Es ist demzufolge die Aufgabe der vorliegenden Erfindung, eine verbesserte Getriebestütze zur Lagerung eines Getriebes an einem Kraftfahrzeug anzugeben, die insbesondere wirtschaftlich herstellbar ist und ein günstiges akustisches Verhalten aufweist. Eine weitere Aufgabe der Erfindung besteht darin, ein Getriebe mit einer derartigen angeflanschten Getriebestütze anzugeben.

Diese Aufgabe wird durch eine Getriebestütze mit den Merkmalen des Anspruchs 1 gelöst.

Ferner wird die obige Aufgabe durch ein Getriebe mit einer derartigen angeflanschten Getriebestütze gelöst.

Durch die Maßnahme, den Trägerabschnitt durch eine Konstruktion aus Längsträgern und sich dazwischen erstreckenden Rippen auszubilden, kann der Trägerabschnitt zum einen wirtschaftlicher hergestellt werden, beispielsweise im Druckgussverfahren. Ferner kann durch die Rippen eine günstige akustische Struktur entwickelt werden, die zu einem besseren akustischen Verhalten führt.

Die Getriebestütze eignet sich zur Durchführung einer Antriebswelle, insbesondere einer Kardanwelle für ein Achsdifferential. Generell ist es jedoch auch denkbar, Achswellen des Differentials hierdurch zu führen.

Ferner ergibt sich durch die Öffnungen der weitere Vorteil, dass auch die Rippen in der Regel keine durch Resonanz anregbaren Schallquellen bilden können.

Die Aufgabe wird auf diese Weise vollkommen gelöst.

Von besonderem Vorzug ist es, wenn die Längsträger als Platten ausgebildet sind, die in Richtung quer zur Längsachse etwa parallel zueinander ausgerichtet sind.

Durch die einstückige Ausbildung mit den sich dazwischen erstreckenden Rippen sind diese Längsträger folglich versteift und lassen sich demzufolge nicht so leicht zu Schwingungen anregen, die zu einem ungünstigen akustischen Verhalten führen würden.

Dabei ist es von besonderem Vorzug, wenn die Rippen jeweils eben sind.

Hierdurch wird die Herstellung im Druckgussverfahren begünstigt.

Von besonderem Vorzug ist es, wenn die Rippen schräg zur Längsachse des Trägerabschnittes ausgerichtet sind.

Bei dieser Ausführungsform ergibt sich eine hohe Stabilität des Trägerabschnittes sowohl in Torsionsrichtung um die Längsachse herum, als auch um eine Achse herum, die senkrecht zur Längsachse ausgerichtet ist.

Demzufolge eignet sich die Getriebestütze besonders zur Drehmomentabstützung.

Dabei ist es von besonderem Vorzug, wenn die Rippen zickzackartig angeordnet sind.

Hierdurch können insbesondere in Torsionsrichtung Momente um die Längsachse herum in beiden Richtungen gut aufgenommen werden.

Von besonderem Vorzug ist es, wenn die Rippen sägezahnartig angeordnet sind.

Hierdurch kann eine erhöhte Stabilität in einer Torsionsrichtung vorgesehen werden, die von der üblichen Drehrichtung (bei Vorwärtsfahrt) der Wellen des Getriebes abhängt.

Gemäß einer weiteren bevorzugten Ausführungsform verbindet ein Versteifungselement einen radial äußeren Rand des Flanschabschnittes mit einem in Längsrichtung mittleren Teil des Trägerabschnittes.

Hierdurch wird nach der Art eines Fachwerkes das Gewicht des Getriebes günstiger in die Getriebestütze eingeleitet.

Dabei ist es von besonderem Vorteil, wenn das Versteifungselement plattenförmig ausgebildet ist.

Hierdurch lässt sich eine günstige Anbindung sowohl an den Flanschabschnitt als auch an den Trägerabschnitt realisieren.

Ferner ist es vorteilhaft, wenn zwischen dem Versteifungselement und dem Trägerabschnitt (oberen Längsträger) wenigstens eine Versteifungsrippe angeordnet ist, die etwa senkrecht zu dem Versteifungselement und dem Trägerabschnitt (oberen Längsträger) ausgerichtet ist.

Hierdurch kann in dem mechanisch besonders beanspruchten Teil des Trägerabschnittes benachbart zu dem Flanschabschnitt eine hohe Steifigkeit eingerichtet werden.

Insgesamt ist gemäß einer besonders bevorzugten Ausführungsform die gesamte Getriebestütze als ein einstückiges Gusselement ausgebildet.

Hierdurch lässt sich die Getriebestütze besonders wirtschaftlich fertigen. Dies wird dadurch erreicht, dass von einer geschlossenen Konstruktion wie im Stand der Technik abgewichen wird.

Die Konstruktion ist nach allen Seiten hin entformbar und ohne Hinterschneidung ausführbar.

Besonders bevorzugtes Material für die Getriebestütze sind Leichtmetalle, insbesondere Aluminium.

Durch die Sandwich-Bauweise ergibt sich eine hohe mechanische Festigkeit, auch ohne zusätzliches Material. Es versteht sich, dass die Anordnung der Rippen sowie die Anordnung und Ausführung von Versteifungselement und Versteifungsrippe sowie ggf. die Anordnung von Versteifungselement und Versteifungsrippe durch FE-Verfahren berechenbar sind.

Insgesamt ergibt sich mit der erfindungsgemäßen Getriebestütze folglich ein besseres akustisches Verhalten bei geringeren Herstellkosten. Zudem ergibt sich gegenüber geschlossenen Konstruktionen eine deutliche Gewichtseinsparung.

Die Rippenform kann durch die Berechnung gemäß dem Finite-Elemente-Verfahren (FE) auch andere Gestalten annehmen, beispielsweise eine Wellenform im Längsschnitt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische perspektivische Anordnung eines Teils eines Antriebsstranges eines Kraftfahrzeuges mit einem Achsgetriebe, das mittels einer Getriebestütze abgestützt ist;
- Fig. 2: eine perspektivische Ansicht von schräg hinten einer Ausführungsform der Getriebestütze gemäß der vorliegenden Erfindung; und
- Fig. 3: eine Seitenansicht der Getriebestütze der Fig. 2.

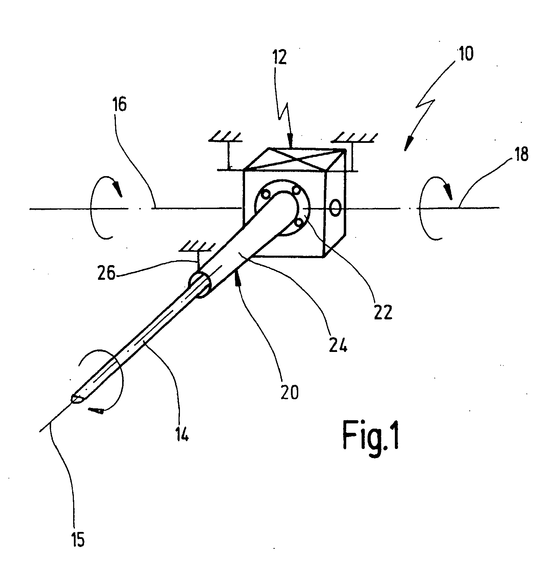

In Fig. 1 ist ein Teil eines Antriebsstranges eines Kraftfahrzeuges generell mit 10 bezeichnet.

Der Antriebsstrang 10 weist ein Achsgetriebe, insbesondere ein Differential 12 auf, in das eine Kardanwelle 14 geführt ist. Die Kardanwelle 14 ist entlang einer Längsachse 15 ausgerichtet.

Seitlich von dem Achsgetriebe 12 erstrecken sich zwei Achswellen 16, 18 zum Antreiben von angetriebenen Rädern des Kraftfahrzeuges.

Das Achsgetriebe 12 ist an dem Fahrzeug mittels dreier Befestigungspunkte gelagert. Die Lagerung am Fahrzeug kann am Rahmen, am Chassis oder an einem Querträger erfolgen, um Beispiele zu nennen.

Zwei der Befestigungspunkte des Achsdifferentials. 12 sind unmittelbar im Bereich des Gehäuses des Achsgetriebes 12 vorgesehen. Diese Lagerpunkte sind in Fig. 1 nicht näher bezeichnet.

Ein dritter Lagerpunkt liegt am Ende einer Getriebestütze 20, die an das Gehäuse des Achsgetriebes 12 angeflanscht ist.

Die Getriebestütze 20 weist einen Flanschabschnitt 22 auf, der an dem Gehäuse des Achsgetriebes 12 befestigt ist. Der Flanschabschnitt 22 kann dabei einen Teil des Gehäuses bilden.

An den Flanschabschnitt schließt sich ein länglicher Trägerabschnitt 24 an, der die Kardanwelle 14 umgibt. Am entgegengesetzten Ende des Trägerabschnittes 14 ist ein Lagerabschnitt 26 vorgesehen, mittels dessen die Getriebestütze 20 an dem Fahrzeug festgelegt wird.

Durch die Lagerung der Getriebestütze 20 in einem Bereich entfernt von dem eigentlichen Gehäuse des Achsdifferentials 12 können Reaktionsmomente auf Grund der Drehmomentübertragung über das Achsgetriebe 12 besser abgestützt werden. Die Verwendung weicherer Gummilager ist möglich, so dass sich ein besseres akustisches Verhalten des Antriebsstranges 10 ergibt.

Der Flanschabschnitt 22 kann mit einem O-Ring-Sitz versehen sein, um eine Abdichtung gegenüber dem Gehäuse des Getriebes zu erzielen. Ferner kann in dem Flanschabschnitt 22 eine Wellendichtung zur Abdichtung gegenüber der Kardanwelle 14 vorgesehen sein.

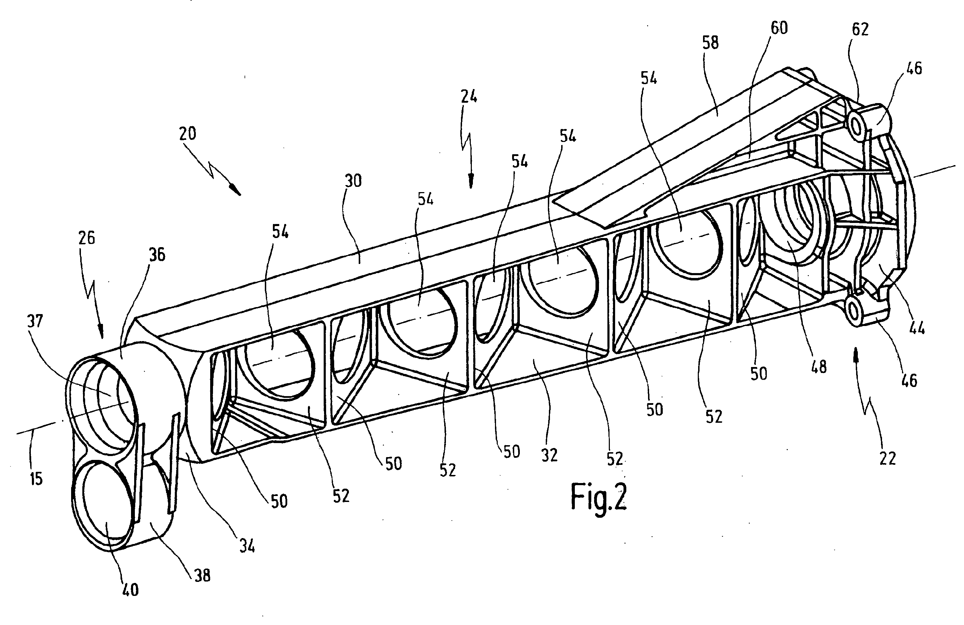

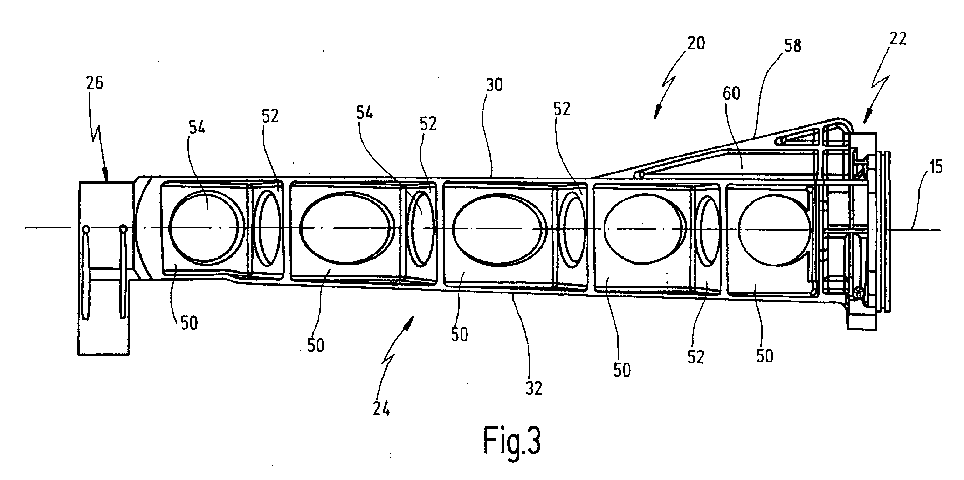

Eine Getriebestütze 20 gemäß einer bevorzugten Ausführungsform der vorliegenden Erfindung ist in den Fig. 2 und 3 dargestellt.

Die Getriebestütze 20 weist einen oberen Längsträger 30 in Form einer länglichen Platte und einen unteren Längsträger 32 in Form einer länglichen Platte auf. Der obere Längsträger 30 und der untere Längsträger 32 sind auf gegenüberliegenden Seiten der Längsachse 15 vorgesehen und in Richtung quer zur Längsachse 15 etwa parallel zueinander ausgerichtet. In Richtung der Längsachse 15 sind die Längsträger 30, 32 ebenfalls parallel zueinander ausgerichtet, können aber auch in einem Winkel zueinander angeordnet (oder gebogen) sein.

Im Bereich des Lagerabschnittes sind die Längsträger 30, 32 mittels einer Blende 34 verbunden, von der sich ein Hülsenfortsatz 36 erstreckt. In dem Hülsenfortsatz 36 ist eine Öffnung 37 ausgebildet, die mit der Längsachse 15 ausgerichtet ist.

Parallel versetzt gegenüber der Längsachse 15 ist an dem Hülsenfortsatz 36 eine Lagerhülse 38 angeformt, die eine Öse 40 ausbildet. In die Öse 40 kann ein Gummilager zur Lagerung des Lagerabschnittes 26 an dem Fahrzeug eingesetzt werden.

Der Flanschabschnitt 22 weist eine sich etwa senkrecht zur Längsachse 15 erstreckende Flanschwand 44 auf, an der umfänglich eine Mehrzahl von Montagenasen 46 vorgesehen ist. Die Montagenasen 46 weisen Öffnungen (nicht näher bezeichnet) zur Durchführung von Verbindungsbolzen, Schrauben etc. auf.

In der Flanschwand 44 ist ferner eine zentrale Öffnung 48 vorgesehen, die ebenfalls mit der Längsachse 15 ausgerichtet ist.

Zwischen den Längsträgern 30, 32 erstrecken sich erste Rippen 50, die jeweils schräg zur Längsachse 15 ausgerichtet sind. Ferner erstrecken sich zwischen den Längsträgern 30, 32 zweite Rippen 52, die ebenfalls schräg zu der Längsachse 15 ausgerichtet sind, jedoch in entgegengesetzter Richtung zu den ersten Rippen 50.

Die ersten Rippen 50 und die zweiten Rippen 52 schließen aneinander an, so dass ein Zickzackprofil gebildet ist.

Genauer gesagt, wie es insbesondere in Fig. 3 zu erkennen ist, bilden die ersten und die zweiten Rippen 50, 52 ein Sägezahnprofil aus.

Hierdurch ergibt sich in Torsionsrichtung um die Längsachse 15 herum eine etwas erhöhte Steifigkeit auf einer Seite der Getriebestütze 20. Hierdurch können Torsionsmomente in jener Richtung besser aufgenommen werden. Diese Richtung hängt von der üblichen Drehrichtung der Kardanwelle 14 ab.

Die ersten und die zweiten Rippen 50, 52 sind ferrer mit jeweiligen Öffnungen 54 ausgebildet, die mit der Längsachse 15 ausgerichtet sind.

Die Öffnungen 37, 54 und 48 dienen zur Durchführung der Kardanwelle 14.

Es versteht sich dabei, dass die Öffnungen 37, 54 und 48 so groß gewählt sind, dass die Getriebestütze 20 die Kardanwelle 14 nicht berührt.

An der Oberseite des oberen Längsträgers 30 ist ein Versteifungselement 58 vorgesehen. Das Versteifungselement 58 erstreckt sich von einem mittleren Teil des Trägerabschnitts 24 hin zu einem oberen Randabschnitt des Flanschabschnittes 22. Das Versteifungselement 58 ist dabei ebenfalls plattenförmig ausgebildet.

Zwischen dem Versteifungselement 58 und dem oberen Längsträger 30 ist eine zentrale Versteifungsrippe 60 vorgesehen, deren Ebene etwa senkrecht verläuft zu den Ebenen des oberen Längsträgers 30 und des Versteifungselementes 58.

Im Bereich des Flanschabschnittes 22 sind weitere sich radial erstreckende Rippen vorgesehen, die in den Fig. 2 und 3 jedoch nicht näher bezeichnet sind.

Die Getriebestütze 20 ist als einstückiges Bauteil ausgeführt und besteht aus Leichtmetall, insbesondere Aluminium. Die Getriebestütze ist ohne Hinterschneidungen ausgeführt und kann im Druckgussverfahren hergestellt werden.

## Patentansprüche

1. Getriebestütze (20) zur Lagerung eines Getriebes (12) an einem Kraftfahrzeug, insbesondere für Achsgetriebe (12), mit einem länglichen Trägerabschnitt (24), der entlang einer Längsachse (15) ausgerichtet ist, einem Flanschabschnitt (22) an einem Ende des Trägerabschnittes (24), wobei der Flanschabschnitt (22) zur Befestigung der Getriebestütze (20) an einem Gehäuse des Getriebes (12) dient, und einem Lagerabschnitt (26) im Bereich eines entgegengesetzten Endes des Trägerabschnittes (24), wobei der Lagerabschnitt (26) zur Lagerung der Getriebestütze (20) an dem Kraftfahrzeug dient, wobei der Trägerabschnitt (24) zwei sich gegenüberliegende Längsträger (30, 32) aufweist, zwischen denen sich Rippen (50, 52) erstrecken, wobei die Längsträger (30, 32) und die Rippen (50, 52) einstückig miteinander ausgebildet sind, **dadurch gekennzeichnet, dass** der Flanschabschnitt (22), der Lagerabschnitt (26) und die Rippen (50, 52) jeweils Öffnungen (48, 37, 54) zur Durchführung einer Antriebswelle (14) des Kraftfahrzeuges aufweisen, die parallel, insbesondere koaxial zur Längsachse (15) des Trägerabschnittes (24) miteinander ausgerichtet sind.

2. Getriebestütze nach Anspruch 1, **dadurch gekennzeichnet, dass** die Längsträger (30, 32) als Platten (30, 32) ausgebildet sind, die quer zur Längsachse (15) etwa parallel zueinander ausgerichtet sind.

3. Getriebestütze nach Anspruch 1 oder 2, **dadurch gekennzeichnet, dass** die Rippen (50, 52) eben sind.

4. Getriebestütze nach einem der Ansprüche 1 - 3, **dadurch gekennzeichnet, dass** die Rippen (50, 52) schräg zur Längsachse (15) des Trägerabschnittes (24) ausgerichtet sind.

5. Getriebestütze nach Anspruch 4, **dadurch gekennzeichnet, dass** die Rippen (50, 52) zickzackartig angeordnet sind.

6. Getriebestütze nach Anspruch 5, **dadurch gekennzeichnet, dass** die Rippen (50, 52) sägezahnartig angeordnet sind.

7. Getriebestütze nach einem der Ansprüche 1 - 6, **dadurch gekennzeichnet, dass** ein Versteifungselement (58) einen radial äußeren Rand (62) des Flanschabschnittes (22) mit einem in Längsrichtung mittleren Teil des Trägerabschnittes (24) verbindet.

8. Getriebestütze nach Anspruch 7, **dadurch gekennzeichnet, dass** das Versteifungselement (58) plattenförmig ausgebildet ist.

9. Getriebestütze nach Anspruch 7 oder 8, **dadurch gekennzeichnet, dass** zwischen dem Versteifungselement (58) und dem oberen Längsträger (30) wenigstens eine Versteifungsrippe (60) angeordnet ist, die etwa senkrecht zu dem Versteifungselement (58) und dem Längsträger (30) ausgerichtet ist.

10. Getriebestütze nach einem der Ansprüche 1 - 9, **dadurch gekennzeichnet, dass** die Getriebestütze (20) als ein einstückiges Gusselement ausgebildet ist.

11. Getriebe (12) mit angeflanschter Getriebestütze (20), nach einem der Ansprüche 1 - 10.

## Claims

1. Gear support (20) for mounting a gear (12) on a motor vehicle, in particular for axle gears (12), with an elongate carrier portion (24) which is oriented along a longitudinal axis (15), with a flange portion (22) at one end of the carrier portion (24), the flange portion (22) serving for fastening the gear support (20) to a case of the gear (12), and with a bearing portion (26) in the region of an opposite end of the carrier portion (24), the bearing portion (26) serving for mounting the gear support (20) on the motor vehicle, wherein the carrier portion (24) has two mutually opposite longitudinal spars (30, 32), between which ribs (50, 52) extend, the longitudinal spars (30, 32) and the ribs (50, 52) being produced in one piece with one another, **characterized in that** the flange portion (22), the bearing portion (26) and the ribs (50, 52) in each case have orifices (48, 37, 54) for leading through a drive shaft (14) of the motor vehicle, the said orifices being aligned with one another in parallel, in particular coaxially to the longitudinal axis (15) of the carrier portion (24).

2. Gear support according to Claim 1, **characterized in that** the longitudinal spars (30, 32) are designed as plates (30, 32) which are oriented approximately parallel to one another transversely to the longitudinal axis (15).

3. Gear support according to Claim 1 or 2, **characterized in that** the ribs (50, 52) are plane.

4. Gear support according to one of Claims 1 - 3, **characterized in that** the ribs (50, 52) are oriented obliquely to the longitudinal axis (15) and the carrier portion (24).

5. Gear support according to Claim 4, **characterized in that** the ribs (50, 52) are arranged in a zigzag manner.

6. Gear support according to Claim 5, **characterized in that** the ribs (50, 52) are arranged in a sawtooth-like manner.

7. Gear support according to one of Claims 1 - 6, **characterized in that** a stiffening element (58) connects a radially outer edge (62) of the flange portion (22) to a longitudinally middle part of the carrier portion (24).

8. Gear support according to Claim 7, **characterized in that** the stiffening element (58) is of plate-shaped design.

9. Gear support according to Claim 7 or 8, **characterized in that** between the stiffening element (58) and the upper longitudinal spar (30) is arranged at least one stiffening rib (60) which is oriented approximately perpendicularly to the stiffening element (58) and to the longitudinal spar (30).

10. Gear support according to one of Claims 1 - 9, **characterized in that** the gear support (20) is produced as a one-piece cast element.

11. Gear (12) having a flanged-on gear support (20) according to one of Claims 1-10.

## Revendications

1. Support de boîte de vitesses (20) pour le montage d'une boîte de vitesses (12) sur un véhicule automobile, en particulier pour un engrenage différentiel (12), comprenant une section de support allongée (24) qui est orientée le long d'un axe longitudinal (15), une section de bride (22) à une extrémité de la section de support (24), la section de bride (22) servant à la fixation du support de boîte de vitesses (20) à un carter de la boîte de vitesses (12), et une section de palier (26) dans la région d'une extrémité opposée de la section de support (24), la section de palier (26) servant au montage du support de boîte de vitesses (20) sur le véhicule automobile, la section de support (24) présentant deux supports longitudinaux opposés (30, 32) entre lesquels s'étendent des nervures (50, 52), les supports longitudinaux (30, 32) et les nervures (50, 52) étant réalisés d'une seule pièce les uns avec les autres, **caractérisé en ce que** la section de bride (22), la section de palier (26) et les nervures (50, 52) présentent à chaque fois des ouvertures (48, 37, 54) pour le passage d'un arbre d'entraînement (14) du véhicule automobile, lesquelles sont orientées parallèlement les unes aux autres, notamment coaxialement à l'axe longitudinal (15) de la section de support (24).

2. Support de boîte de vitesses selon la revendication 1, **caractérisé en ce que** les supports longitudinaux (30, 32) sont réalisés sous forme de plaques (30, 32) qui sont orientées approximativement parallèlement l'une à l'autre transversalement à l'axe longitudinal (15).

3. Support de boîte de vitesses selon la revendication 1 ou 2, **caractérisé en ce que** les nervures (50, 52) sont planes.

4. Support de boîte de vitesses selon l'une quelconque des revendications 1 à 3, **caractérisé en ce que** les nervures (50, 52) sont orientées obliquement par rapport à l'axe longitudinal (15) de la section de support (24).

5. Support de boîte de vitesses selon la revendication 4, **caractérisé en ce que** les nervures (50, 52) sont disposées en zigzag.

6. Support de boîte de vitesses selon la revendication 5, **caractérisé en ce que** les nervures (50, 52) sont disposées en dents de scie.

7. Support de boîte de vitesses selon l'une quelconque des revendications 1 à 6, **caractérisé en ce qu'**un élément de renforcement (58) relie un bord radialement extérieur (62) de la portion de bride (22) à une partie centrale dans la direction longitudinale de la section de support (24).

8. Support de boîte de vitesses selon la revendication 7, **caractérisé en ce que** l'élément de renforcement (58) est réalisé sous forme de plaque.

9. Support de boîte de vitesses selon la revendication 7 ou 8, **caractérisé en ce qu'**entre l'élément de renforcement (58) et le support longitudinal supérieur (30) est disposée au moins une rainure de renforcement (60) qui est orientée approximativement perpendiculairement à l'élément de renforcement (58) et au support longitudinal (30).

10. Support de boîte de vitesses selon l'une quelconque des revendications 1 à 9, **caractérisé en ce que** le support de boîte de vitesses (20) est réalisé sous forme d'élément coulé d'une seule pièce.

11. Boîte de vitesses (12) avec un support de boîte de vitesses bridé (20) selon l'une quelconque des revendications 1 à 10.
